# EUROPEAN PATENT APPLICATION

(11) **EP 3 270 394 A1**
(43) Date of publication of application: **17.01.2018**
(21) Application number: 16179604.0
(22) Date of filing: 15.07.2016
(51) Int. Cl.: H01H 1/38, H02B 11/04

(54) **ELECTRICAL AND MECHANICAL CONNECTION OF A SWITCHGEAR AND A SWITCHING DEVICE, SUCH AS A CIRCUIT BREAKER**

(71) Applicant: ABB Schweiz AG, 5400 Baden (CH)
(72) Inventor: BELLONI, Francesco, 24124 Bergamo (BG) (IT); FARINA, Andrea, 20900 Monza (MB) (IT)
(74) Representative: Fiorentino, Luca

(57) **Abstract**

An apparatus comprises a switchgear (5) having at least one couple of stationary conducting terminals (6) and a switching device (3), such as a circuit breaker, having at least one couple of movable conducting terminals (2), wherein the switching device (3) is movable with respect to the switchgear along a connection/disconnection direction (CD) and is electrically and mechanically connectable to the switchgear (5) by engagement of the movable contacting terminals (2) with the corresponding stationary contacting terminals (6). At least two movable conducting terminals (2) of the switching device (3) and/or at least two stationary conducting terminals (6) of the switchgear (5) are shifted one relative to the other along the connection/disconnection direction (CD).

## Description

### BACKGROUND

### Technical field

The present invention relates to the electrical and mechanical connection of a switching device, such as a circuit-breaker, to a switchgear.

### Description of the Related Art

In the medium voltage field (which commonly refers to voltages from 1 kV to some tens of kV), it is known the use of the so called tulip-contact-assemblies for the mechanical and electrical connection of movable conducting terminals provided on a draw-out circuit breaker to stationary conducting terminals of a switchgear.

The tulip-contact-assembly comprises a support frame which is defined by a pair of annular plates which are mutually parallel and spaced apart and which are fixed to one other by rods. The tulip-contact-assembly further comprises a plurality of contact-finger-elements which rest into seat-portions of the flanges and are urged radially against the latter by helical springs extending with a ring-shape around a central axis of the support frame.

Each contact-finger-element has an oblong shape extending along a longitudinal axis parallel to the above mentioned central axis, and comprises a front contact portion for removably engaging with a stationary contact-pin of the switchgear, and a rear contact portion intended to keep in contact with a conducting-arm of the movable circuit breaker.

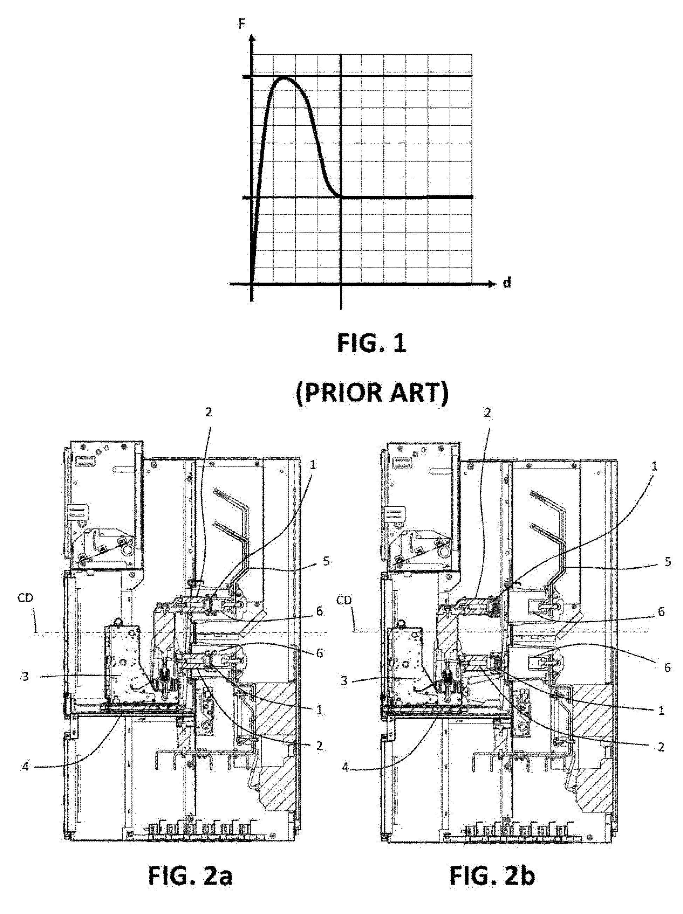

In general, it is necessary that, when the connection is established, all the tulip-contact-assemblies exert a very high force on the corresponding pins of the switchgear. However this results in a very high racking-in force, i.e. the force which is necessary to couple the tulip-contact-assemblies with the contact pins of the switchgear, due to the large number of contact-finger-elements of each tulip-contact-assembly that need to be opened and connected to each corresponding contact pin of the switchgear. Figure 1 is a diagram showing the racking-in force F as a function of the tulip-contact-assembly position d relative to the pin of the switchgear. As shown, the force reaches a maximum in correspondence of the first engagement of the contact-finger-elements with the pins (mainly due to the elastic forces of the springs), then drops to a constant value during a sliding phase where friction is present.

This high racking-in force could cause an unreliable electrical connection between the circuit breaker and the switchgear.

Moreover, sometimes it happens that a properly connection doesn't occur. An unreliable connection might cause in turn high electrical resistance, over-temperature in the panel, low performances during a short time current.

### BRIEF SUMMARY OF THE INVENTION

The problem underlying the present invention is therefore to provide an apparatus comprising a switchgear and a switching device, such as a circuit breaker, wherein the electrical and mechanical connection between the switchgear and the switching device is suitable to maintain a very high force when the respective terminals are connected, while reducing the peak of the racking-in force during the racking-in phase.

This problem is solved by an apparatus according to claim 1.

Dependent claims define possible advantageous embodiments of the invention.

### BRIEF DESCRIPTION OF THE DRAWINGS

Further characteristics and advantages will be more apparent from the following description of preferred embodiments and of their alternatives given as a way of an example with reference to the enclosed drawings in which:
Figure 1 is a diagram showing the force F as a function of the position d during the coupling of a movable switching device to a switchgear according to the prior art;
Figures 2a and 2b are side partially sectional views of a circuit breaker and a switchgear, respectively in a connected configuration and in a disconnected configuration;
Figure 3 is a schematic perspective view of a circuit breaker and of switchgear pins in a disconnected configuration;
Figure 4 is a plan view of a circuit breaker and of switchgear pins in a disconnected configuration according to a possible embodiment;
Figure 5 is a plan view of a circuit breaker and of switchgear pins in a disconnected configuration according to a further possible embodiment;
Figure 6 is a side view of a circuit breaker and of switchgear pins in a disconnected configuration according to a further possible embodiment;
Figure 7 is a side view of a circuit breaker and of switchgear pins in a disconnected configuration according to a further possible embodiment;
Figure 8 is a plan view of a circuit breaker according to a further possible embodiment;
Figure 9 is a plan view of a circuit breaker according to a further possible embodiment;
Figure 10 is a side view of a circuit breaker according to a further possible embodiment;
Figure 11 is a plan view of a circuit breaker according to a further possible embodiment;
Figure 12 is a diagram showing the force F as a function of the position d during the coupling of a movable switching device and a stationary switchgear according to an possible embodiment of the invention.

### DETAILED DESCRIPTION

In the following description, same alphanumeric references are used for analogous exemplary elements when they are depicted in different drawings.

Referring to the exemplary embodiment of Figures 2a-2b, a switching device, such as a circuit breaker, is indicated with reference number 3 and a switchgear is indicated with reference number 5. The switching device 3 can be in particular a draw-out circuit breaker which can be housed in the switchgear 5. Such a circuit breaker 3, in a non-limitative way, is preferably of the type which is supported by a motorized trolley 4 that can move along a connection/disconnection direction CD from an extraction position with respect to the switchgear 5 (figure 2b), in which movable conducting terminals 2 of the circuit breaker 3 (such as contact-arms or conducting-bushings), are disengaged from corresponding stationary conducting terminals 6 of the switchgear 5 (such as stationary-conducting-pins), to an insertion position in the switchgear 5 (figure 2a), in which the movable conducting terminals 2 are connected to the corresponding stationary conducting terminals 6.

Contact-assemblies 1 can be fixed to each of the conducting terminals 2 mounted on and movable together with the circuit breaker 3 and are suitable to engage with the stationary conducting terminals 6 of the switchgear 5. However, in an alternative further possible embodiment (not shown in the Figures), the contact-assemblies 1 can also be assembled on the stationary conducting terminals 6 of the switchgear 5 in order to receive, and engage with, the movable conducting terminals 2 of the circuit breaker 3.

In the present description contact-assemblies of the tulip type will be mainly considered as an exemplary embodiment. However, further possible embodiments of the contact assemblies are possible. For example, the contact-assemblies 1 can be of the gripper type (not shown in the Figures).

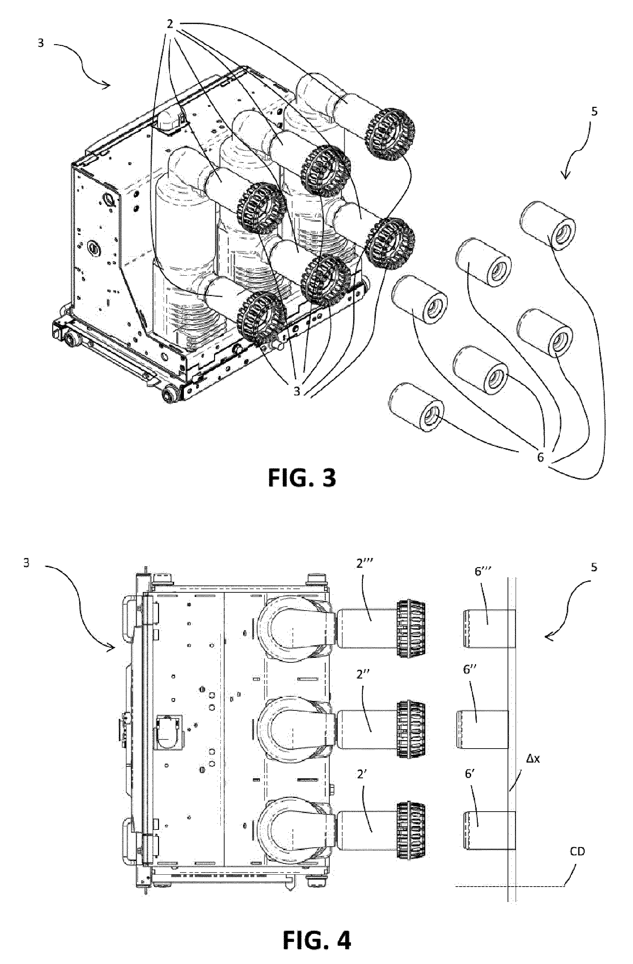

Figure 3 shows the circuit breaker 3 with the respective conducting terminals 2 and the contact-assemblies 1, and the conducting terminals 6 of the switchgear 5 (the latter not shown) according to a possible embodiment of the invention. In the embodiment shown, the switchgear 5 and the circuit breaker 3 are of the multiphase-type, in particular of the three-phase type. Therefore, each of them comprises three couples 2', 2", 2"' and 6', 6", 6"' of respective conducting terminals. As will be clear to the skilled person, according to a further possible embodiment, the switchgear 5 and the circuit breaker 3 can be of the one-phase type. In this case, each of the switchgear 5 and the circuit breaker 3 comprises a single couple of respective conducting terminals.

According to the invention, at least two conducting terminals 2 of the circuit breaker 3 and/or at least two conducting terminals 6 of the switchgear 5 are shifted one relative to the other of a quantity Δx along the connection/disconnection direction CD. In this manner, with reference for example to Figures 2a and 2b, when the circuit breaker 3 approaches the switchgear 5 along the connection/disconnection direction CD in order to realize the connection between the movable conducting terminals 2 and the stationary conducting terminals 6 through the contact-assemblies 1 fixed to the movable conducting terminals 2, a first movable conducting terminal of the circuit breaker 3 engages a corresponding first stationary conducting terminal of the switchgear 5, and subsequently a second movable conducting terminal of the circuit breaker 3 engages a corresponding second stationary conducting terminal of the switchgear 5. Consequently, the racking-in force is also partitioned (because the engagement of the conducting terminals does not take place at the same time) and its highest value is lower that the racking-in force necessary in the system according to the prior art, wherein all the movable conducting terminals of the circuit breaker engage the corresponding stationary conducting terminals of the switchgear at the same time, as discussed with reference to Figure 1.

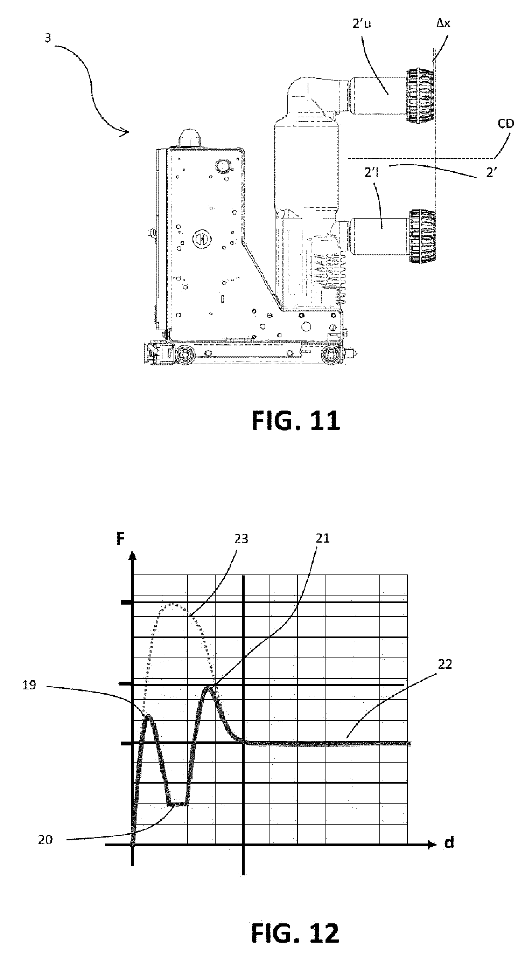

The technical advantages of the arrangement according to the invention can be better appreciated considering the diagram in Figure 12, showing the force F necessary for realizing the connection, as a function of the position d of the circuit breaker relative to the switchgear. In the diagram the racking-in force is depicted for the mono-phase case, wherein two conducting terminals of the circuit breaker or two conducting terminals of the switchgear are shifted one relative to the other. As shown, there is a first force peak 19 when a first movable conducting terminal of the circuit breaker enters in contact with the corresponding first stationary conducting terminal of the switchgear through the respective contact-assembly. Then the force drops to a first substantially constant value 20 due to the sliding of contact-assembly along the first stationary conducting terminal. Then, the force reaches a second force peak 21 when the second movable conducting terminal of the circuit breaker enters in contact with the corresponding second stationary conducting terminal of the switchgear 5 through the respective contact-assembly (in this moment, the contact-assembly associated to the first movable conducting terminal of the circuit breaker 3 continues to slide on the first stationary conducting terminal). Then, again, the force drops to a second substantially constant value 22 due to the sliding of the contact-assemblies of both the first and the second movable conducting terminals on the corresponding first and second stationary conducting terminals of the switchgear.

Compared to the case according to the prior art where the shifting Δx between the conducting terminals of the circuit breaker and of the switchgear is equal to zero (dotted line 23, corresponding to the diagram in Figure 1), the maximum force is significantly lower during the racking-in phase and is the same when the engagement is completed.

With reference to Figures 4-11, several non-limiting embodiments of the invention will be now described.

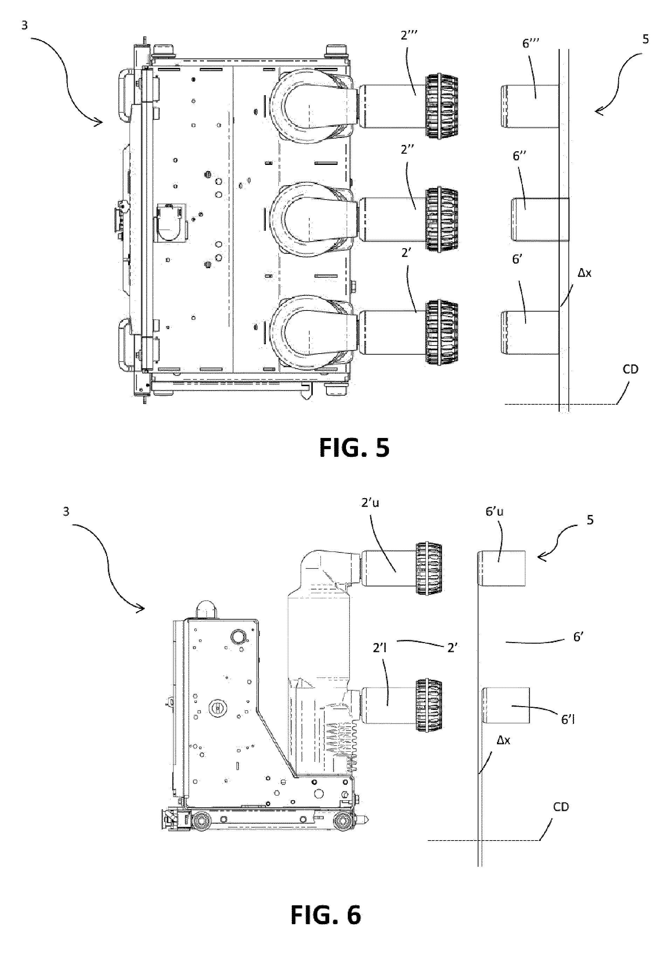

According to possible embodiments (Figures 4-5), at least one couple of stationary conducting terminals of the switchgear 5 - corresponding to one phase - is shifted relative to the other couples of stationary conducting terminals of the switchgear 5 - corresponding to the other phases. The relative shifting is indicated with Δx and is referred to the above mentioned connection/disconnection direction CD. In particular, the couples of stationary conducting terminals of the switchgear 5 can be shifted one relative to the others in an alternating manner. The corresponding movable conducting terminals of the circuit breaker 3 can be non-shifted. For example, according to the embodiment shown in Figure 4, the central couple of stationary conducting terminals 6" is protruding with respect to the lateral couples of stationary conducting terminals 6' and 6"', whilst the corresponding couples 2', 2" and 2"' of movable conducting terminals are non-shifted. According to the embodiment shown in Figure 5, the lateral couples of stationary conducting terminals 6' and 6"' are protruding with respect to the central couple of stationary conducting terminals 6", whilst the corresponding couples 2', 2" and 2"' of movable conducting terminals are non-shifted. It is to be noted that in Figures 4-5 only the upper conducting terminal of each couple of terminals is visible, wherein the term "upper" as well as "lower" is referred to the normal conditions of use.

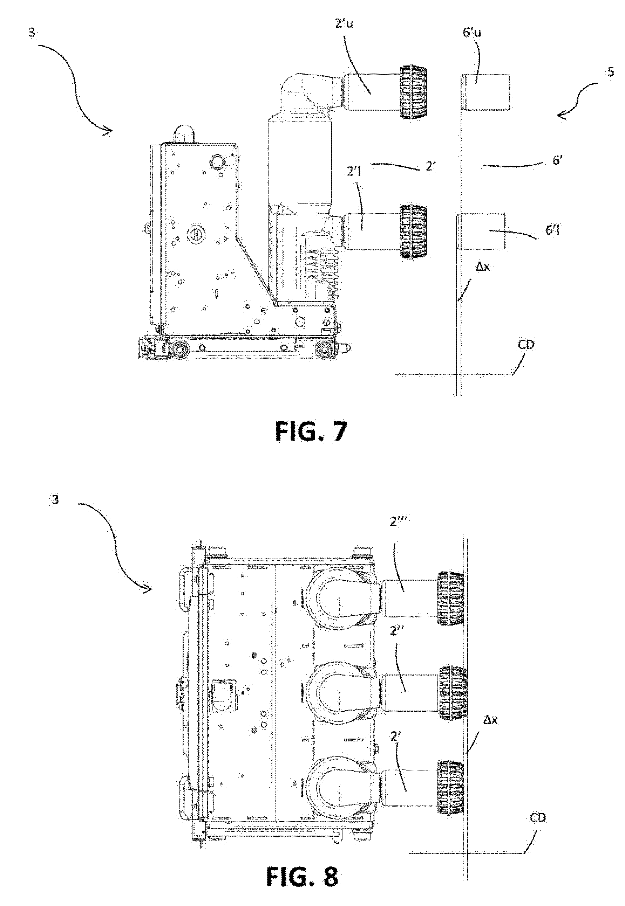

According to further possible embodiments (Figures 6-7), one stationary conducting terminal of at least one couple of stationary conducting terminals of the switchgear 5 is shifted relative to the other stationary conducting terminal of the same couple of stationary conducting terminals of the switchgear 5. The relative shifting is again indicated with Δx and is referred to the above mentioned connection/disconnection direction CD. The corresponding movable conducting terminals of the circuit breaker 3 can be non-shifted. For example, according to the embodiment shown in Figure 6, the upper stationary contacting terminal 6'u of the visible couple of stationary conducting terminals 6' (which can be the only one in the mono-phase case, or a lateral one in the multiple-phase case) is protruding with respect to the lower stationary contacting terminal 6'1 of the same couple of stationary conducting terminals 6' of the switchgear 5, whilst the corresponding stationary conducting terminals 2'u and 2'1 of the corresponding couple of movable contacting terminals 2' are non-shifted. According to the embodiment shown in Figure 7, the lower stationary contacting terminal 6'1 of the visible couple of stationary conducting terminals 6' is protruding with respect to the upper stationary contacting terminal 6'u of the same couple of stationary conducting terminals 6', whilst the corresponding stationary conducting terminals 2'u and 2'1 of the corresponding couple of movable contacting terminals 2' are non-shifted.

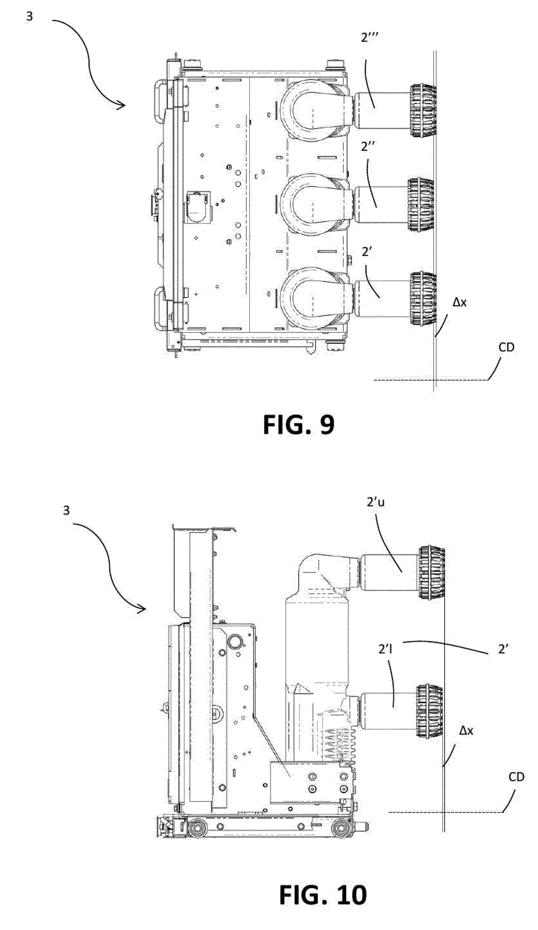

According to further possible embodiments (Figures 8-9), at least one couple of movable conducting terminals of the circuit breaker 3 - corresponding to one phase - is shifted relative to the other couples of movable conducting terminals of the circuit breaker 3 - corresponding to the other phases. The relative shifting is indicated with Δx and is referred to the above mentioned connection/disconnection direction CD. In particular, the couples of movable conducting terminals of the circuit breaker 3 can be shifted one relative to the others in an alternating manner. The corresponding stationary conducting terminals of the switchgear 5 can be non-shifted. For example, according to the embodiment shown in Figure 8, the central couple of movable conducting terminals 5" is protruding with respect to the lateral couples of movable conducting terminals 5' and 5"'. According to the embodiment shown in Figure 9, the lateral couples of movable conducting terminals 5' and 5"' are protruding with respect to the central couple 5" of movable conducting terminals.

According to further possible embodiments (Figures 10-11), one movable conducting terminal of at least one couple of movable conducting terminals of the circuit breaker 3 - corresponding to one phase - is shifted relative to the other movable conducting terminal of the same couple of movable conducting terminals of the circuit breaker 3. The relative shifting is again indicated with Δx and is referred to the above mentioned connection/disconnection direction CD. The corresponding stationary conducting terminals of the switching device (not shown) can be non-shifted. For example, according to the embodiment shown in Figure 10, the upper movable contacting terminal 2'u of the visible couple of movable conducting terminals 2' is protruding with respect to the lower movable contacting terminal 2'1 of the same couple of movable conducting terminals 2'. According to the embodiment shown in Figure 11, the lower movable contacting terminal 2'1 of the visible couple of movable conducting terminals 2' is protruding with respect to the upper movable contacting terminal 2'u of the same couple of movable conducting terminals.

Of course, any combination of the above-described embodiments can be envisaged.

In the embodiments described above, the contact-assembly 1 is tulip-shaped. However, as already anticipated above, the contact assembly 1 can be differently shaped. In particular, it can be alternatively gripper-shaped so to be used for example for the connection of the gripper to a conducting bus bar instead of a cylindrical terminal.

To the above-described embodiments, the skilled person, in order to meet specific current needs, can make several additions, modifications, or substitutions of elements with other operatively equivalent elements, without however departing from the scope of the appended claims.

## Claims

1. Apparatus comprising a switchgear (5) having at least one couple of stationary conducting terminals (6) and a switching device (3), such as a circuit breaker, having at least one couple of movable conducting terminals (2), wherein the switching device (3) is movable with respect to the switchgear along a connection/disconnection direction (CD) and is electrically and mechanically connectable to the switchgear (5) by engagement of the movable contacting terminals (2) with the corresponding stationary contacting terminals (6), **characterised in that** at least two movable conducting terminals (2) of the switching device (3) and/or at least two stationary conducting terminals (6) of the switchgear (5) are shifted one relative to the other along the connection/disconnection direction (CD).

2. Apparatus according to claim 1, wherein the switchgear (5) comprises a plurality of couples of stationary conducting terminals (6', 6", 6"') and the switching device (3) comprises a plurality of couples of movable conducting terminal (2', 2", 2'"), at least one couple of stationary conducting terminals of the switchgear (5) being shifted relative to the other couples of stationary conducting terminals of the switchgear (5)

3. Apparatus according to claim 2, wherein the couples of stationary conducting terminals of the switchgear (5) are shifted one relative to the others in an alternating manner.

4. Apparatus according to any preceding claim, wherein one stationary conducting terminal of at least one couple of stationary conducting terminals of the switchgear (5) is shifted relative to the other stationary conducting terminal of the same couple of stationary conducting terminals of the switchgear (5).

5. Apparatus according to any preceding claim, wherein the switchgear (5) comprises a plurality of couples of stationary conducting terminals (6', 6", 6"') and the switching device (3) comprises a plurality of couples of movable conducting terminal (2', 2", 2"'), at least one couple of movable conducting terminals of the switching device (3) being shifted relative to the other couples of movable conducting terminals of the switching device (3).

6. Apparatus according to claim 5, wherein the couples of movable conducting terminals of the switching device (3) are shifted one relative to the others in an alternating manner.

7. Apparatus according to any preceding claim, wherein one movable conducting terminal of at least one couple of movable conducting terminals of the switching device (3) is shifted relative to the other movable conducting terminal of the same couple of movable conducting terminals of the switching device (3).

8. Apparatus according to any preceding claim, comprising contact-assemblies (1) respectively coupled either to the movable conducting terminals (2) of the switching device (3) or to the stationary conducting terminals (6) of the switchgear (5) so to allow said mechanical and electrical connection of the switching device (3) and the switchgear (5).

9. Apparatus according to claim 8, wherein said contact-assemblies (1) are tulip- or pincher- shaped.

10. Apparatus according to any preceding claim, wherein said switching device (3) is a circuit breaker.
